# EUROPÄISCHE PATENTANMELDUNG

(11) **EP 2 639 252 A1**
(43) Veröffentlichungstag der Anmeldung: **18.09.2013**
(21) Anmeldenummer: 12159490.7
(22) Anmeldetag: 14.03.2012
(51) Int. Cl.: C08G 59/50, C08G 69/40

(54) **Neue Reaktivpolymerkatalysatoren für 2K-Epoxidharzsysteme**

(71) Anmelder: Sika Technology AG, 6340 Baar (CH)
(72) Erfinder: Gerber, Ulrich, 8142 Uitikon-Waldegg (CH); Finter, Jürgen, 8037 Zürich (CH)
(74) Vertreter: Sika Patent Attorneys

(57) **Zusammenfassung**

Beschrieben wird ein oligomeres Kondensationsprodukt, dass aus mindestens einem (Hydroxymethyl)phenol der allgemeinen Formel (I) 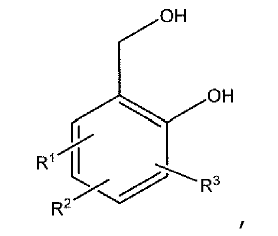 in welcher R¹ gleich Wasserstoff oder -CH₃ ist, R² gleich-CH₂OH ist, und R³ gleich Wasserstoff oder -CH₃ ist, mindestens einem Polyamin und wahlweise mindestens einer phenolischen Verbindung mit zwei gegenüber einer Reaktion mit den MethylolGruppen des (Hydroxymethyl)phenols reaktiven Zentren erhältlich ist. Derartige Kondensationsprodukte können als Polymerisationskatalysatoren für Epoxidharze verwendet werden, wobei eine schnellere Härtungszeit bei vergleichbarer Topfzeit in 2-Komponenten Epoxidharzklebstoffen erreicht werden kann. Somit ist es möglich, die Fertigungszeiten in der industriellen Anwendung weiter zu verkürzen und neue Anwendungsgebiete zu erschließen, in denen an Stelle einer Verschraubung ein Verkleben angewendet werden kann. Die vorstehend beschriebenen Kondensationsprodukte weisen darüber hinaus gegenüber konventionellen ähnlichen Kondensationsprodukten den Vorteil auf, dass bei ihrer Synthese toxische Substanzen, wie beispielsweise Formaldehyd oder Dimethylamin, weder eingesetzt werden müssen noch freigesetzt werden.

Weiterhin betrifft die vorliegende Erfindung ein Verfahren zur Herstellung oben bezeichneter oligomerer Kondensationsprodukte sowie deren Verwendung in der Härtung von Epoxidharzsystemen.

## Beschreibung

Die vorliegende Erfindung betrifft neuartige mannichanaloge Kondensationsprodukte sowie ein neues Verfahren zu deren Herstellung. Weiterer Gegenstand der vorliegenden Erfindung ist die Verwendung dieser Kondensationsprodukte als Beschleuniger in der Härtung von Epoxidharzsystemen.

### Stand der Technik

Ein Epoxidharz besteht aus Polyetherpolymeren, die je nach Reaktionsführung unter Zugabe geeigneter Härter einen duroplastischen Kunststoff von hoher Festigkeit und chemischer Beständigkeit ergeben. Werden Epoxidharz und Härter gemischt, erfolgt je nach Zusammensetzung und Temperatur üblicherweise innerhalb von wenigen Minuten bis einigen Stunden die Aushärtung des ursprünglich viskosen Gemisches. Als Härter für Epoxidharze sind unterschiedliche Systeme kommerziell erhältlich, wie beispielsweise Härter auf Amin-, Amid- und Anhydridbasis (beispielsweise unter der Bezeichnung Epikure^{®} von Hexion Speciality Chemicals) oder Härter auf Basis von Polyetheraminen (beispielsweise unter der Bezeichnung Jeffamine^{®} von Huntsman).

Als Härter bzw. Beschleuniger können auch Mannichbasen aus primären Aminen, Formaldehyd und Phenolen eingesetzt werden (vgl. EP 0 253 339 A).

Die WO 00/15687 beschreibt einen Mannichbasen-Beschleuniger, welcher durch Transaminierung einer Mannichbase mit einem Amin hergestellt wird.

Ein Nachteil herkömmlicher Mannichbasen liegt in der Verwendung von Phenol als Ausgangsmaterial, da diese Mannichbasen häufig nicht vollständig umgesetztes Phenol enthalten. Aufgrund der Toxizität von freiem Phenol sind auf Phenol basierende Mannichbasen für viele Anwendungsbereiche daher nicht einsetzbar.

Ein weiterer Nachteil bei der Verwendung herkömmlicher Mannichbasen besteht darin, dass diese unter Verwendung von Formaldehyd hergestellt werden müssen. Formaldehyd wird unter anderem für die Entstehung von Allergien, Haut-, Atemwegs- und Augenreizungen verantwortlich gemacht. Demgemäß besteht ein Bedarf an der Bereitstellung von mannichanalogen Kondensationsprodukten, welche unter Vermeidung von Formaldehyd herstellbar sind.

Ein Ansatz, der den Einsatz von Formaldehyd vermeidet, ist in der US 6,916,550 beschrieben, die von 2,4,6-Tris(dimethylaminomethyl)phenol ausgeht und dieses mit Diaminen, insbesondere mit Polyoxyalkylendiaminen, unter Abspaltung von Dimethylamin umsetzt. Dieses Verfahren weist jedoch den Nachteil auf, dass auch das entstehende Dimethylamin toxisch ist (MAK-Wert 2 ppm). Damit kann auch gemäß diesem Ansatz die Freisetzung von gesundheitsschädlichen Emissionen nicht vermieden werden.

Darüber hinaus sind die Verfahren zur Herstellung von Mannichbasen im Stand der Technik sehr aufwändig und schwierig zu führen, insbesondere dann, wenn die Ausbildung von hochmolekularen Kondensationsprodukten verhindert werden soll. So offenbart beispielsweise die EP 1 475 411 ein zweistufiges Verfahren zur Herstellung von Mannichbasen, basierend auf m-Kresol oder 3,5-Xylenol und Polyaminen, bei dem vorzugsweise ein tertiäres Amin verwendet wird. Ebenso wird ein zweistufiges Verfahren zur Herstellung von Mannichbasen in der EP 1 475 412 A offenbart, wobei diese aus Phenolen, wie m-Kresol, 3,5-Xylenol oder Resorcin, mit Polyaminen, vorzugsweise unter Verwendung von tertiären Aminen, gewonnen werden. Derartige zweistufige Verfahren sind mit erheblichem Aufwand verbunden und verteuern die Herstellung der Mannichbasen.

Gemäß einem alternativen Ansatz können als phenolische Ausgangsprodukte Resorcine verwendet werden, wie sie beispielsweise in der EP 717 253 A1 beschrieben sind und die bei Umsetzung mit Formaldehyd und Polyaminen niedermolekulare Mannichbasen für die Härtung von Epoxidzusammensetzungen liefern.

Ausgehend von diesem Stand der Technik stellt sich die vorliegende Erfindung die Aufgabe, alternative Beschleuniger für Epoxidharze oder Härter für Epoxidharze und Polyurethane bereitzustellen, welche die vorstehend aufgezeigten Nachteile möglichst vermeiden. Insbesondere stellte sich die vorliegende Erfindung die Aufgabe, Beschleuniger für Epoxidharze oder Härter für Epoxidharze und Polyurethane bereitzustellen, welche zum einen kein freies Phenol enthalten und bei deren Herstellung zum anderen möglichst weder Formaldehyd noch andere toxische Substanzen, wie Dimethylamin, freigesetzt werden. Bei der Herstellung entsprechender Beschleuniger sollte daher vorzugsweise auf die Verwendung von Phenolen und Formaldehyd sowie von Ausgangsmaterialien, bei deren Umsetzung mit einem Polyamin toxische Amine, wie Dimethylamin, freigesetzt wird, verzichtet werden.

### Darstellung der Erfindung

Gelöst werden diese Aufgaben durch ein oligomeres Kondensationsprodukt, welches herstellbar ist aus mindestens einem (Hydroxymethyl)phenol der allgemeinen Formel (I) 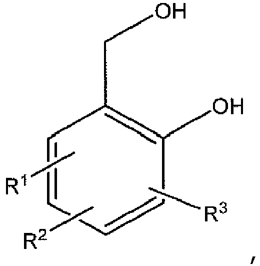 in welcher R¹ gleich Wasserstoff oder -CH₃ ist, R² gleich -CH₂OH ist, und R³ gleich Wasserstoff oder -CH₃ ist, mindestens einem Polyamin und wahlweise mindestens eine phenolische Verbindung mit zwei gegenüber einer Reaktion mit den Methylol-Gruppen des (Hydroxymethyl)phenols reaktiven Zentren.

Die erfindungsgemäßen oligomeren Kondensationsprodukte eignen sich als Beschleuniger für Epoxidharzsysteme sowie als Härter für Epoxidharzsysteme, insbesondere in Form von Zweikomponentenepoxidharz-Systemen, und Polyurethanen. Dabei können schnellere Härtungszeiten bei vergleichbarer Topfzeit in Zweikomponenten-Expoxidklebstoffen erreicht werden als mit vergleichbaren Härtern aus dem Stand der Technik. Dadurch verkürzen sich die Fertigungszeiten was die Möglichkeit neuer Anwendungsgebiete eröffnet, in denen Verklebungen anstelle von Verschraubungen oder Vernietungen möglich werden.

Insbesondere eignen sich die erfindungsgemäßen oligomeren Kondensationsprodukte zur Beschleunigung der Aushärtung von Epoxidharzklebstoffen, zur Verbesserung der Haftung von Epoxidharzklebstoffen und/oder der Scherfestigkeit von Epoxidharzklebstoffen, wobei aufgrund der Verwendung spezieller Phenol- und Aminkomponenten, die aus dem Stand der Technik bekannten Nachteile im Wesentlichen vermieden werden. Insbesondere enthalten die erfindungsgemäßen oligomeren Kondensationsprodukte keine Rückstände aus Phenol, Formaldehyd oder anderen toxischen Substanzen, wie Dimethylamin.

Die erfindungsgemäßen oligomeren Kondensationsprodukte sind aus einfach zugänglichen und kostengünstigen Rohstoffen über ein einfaches Herstellungsverfahren, welches nachstehend beschrieben wird und das ebenfalls Gegenstand der vorliegenden Erfindung ist, zugänglich. Die erfindungsgemäßen oligomeren Kondensationsprodukte zeichnen sich insbesondere durch ein exzellentes Härtungsverhalten von Epoxidharzklebstoffen aus.

Wie vorstehend erwähnt, betrifft die vorliegende Erfindung ein oligomeres Kondensationsprodukt, welches aus mindestens einem (Di-Hydroxymethyl)phenol gemäß der allgemeinen Formel (I), mindestens einem Polyamin und wahlweise mindestens einer phenolischen Verbindung mit zwei gegenüber einer Reaktion mit den Methylol-Gruppen des (Di-Hydroxymethyl)phenols reaktiven Zentren herstellbar ist.

Unter einem (Hydroxymethyl)phenol wird im Rahmen der vorliegenden Erfindung ein Phenol verstanden, welches in ortho-, meta- oder para-Position zur phenolischen OH-Gruppe mindestens einen Methylol-Substituenten trägt. Solche Phenole sind kommerziell erhältlich. Bevorzugte (Hydroxymethyl)phenole sind solche, in denen R² in ortho-Position zur phenolischen OH-Gruppe in Formel (I) angeordnet ist. In einer alternativen bevorzugten Ausführungsform weist das (Hydroxymethyl)phenol der allgemeinen Formel (I) mindestens eine weitere CH₃-Gruppe als Substituenten R¹ oder R² auf. Bevorzugte (Hydroxymethyl)phenole sind das 2,6-Di(hydroxymethyl)-4-methyl-phenol und das 2,4-Di(hydroxymethyl)-6-methyl-phenol. Aus Kostengründen ist die Verwendung von 2,6-Di(hydroxymethyl)-4-methyl-phenol besonders bevorzugt einzufügen. Darüber hinaus können im Rahmen der vorliegenden Erfindung zur Herstellung der erfindungsgemäßen oligomeren Kondensationsprodukte auch weitere (Hydroxymethyl)phenole, wie beispielsweise 2-(Hydroxymethyl)phenol, 3-(Hydroxymethyl)phenol oder 4-(Hydroxymethyl)phenol zugesetzt werden, diese sollten jedoch höchstens 50 Mol-%, insbesondere höchsten 20 Mol-%, und besonders bevorzugt höchstens 10 Mol-% der Gesamtmenge an (Hydroxymethyl)phenolen ausmachen. Die Auswahl und Zusammensetzung der eingesetzten (Hydroxymethyl)phenole hat einen starken Einfluss auf die Eigenschaften der resultierenden oligomeren Kondensationsprodukte und damit auf die unter Verwendung dieser oligomeren Kondensationsprodukte als Härter bzw. Beschleuniger resultierenden Epoxidsysteme.

Bei dem zweiten Bestandteil des Kondensationsprodukts handelt es sich um ein Polyamin. Bei dem Polyamin kann es sich handeln um ein aliphatisches Polyamin wie Ethylendiamin (EDA), Diethylentriamin (DETA), Triethylentetramin (TETA), Hexamethylendiamin (HMDA), N-(2-Aminoethyl)-1,3-propandiamin, N,N'-1,2-Ethandiylbis-1,3-propandiamin oder Dipropylentriamin, ein arylaliphatisches Polyamin, wie m-Xyloldiamin (mXDA) oder p-Xyloldiamin, ein cycloaliphatisches Polyamin, wie 1,3-Bisaminocyclohexylamin (1,3-BAC), Isophorondiamin (IPDA) oder 4,4'-Methylenbiscyclohexanamin, ein aromatisches Polyamin, wie m-Phenyldiamin, Diaminodiphenylmethan (DDM) oder Diaminodiphenylsulphon (DDS), ein heterocyclisches Polyamin, wie N-Aminoethylpiperazin (NAEP) oder 3,9-bis(3-aminopropyl)-2,4,8,10-tetraoxaspiro(5,5)undecan, ein Polyalkoxypolyamin, in dem die Alkoxy-Gruppe eine Oxyethylen-, Oxypropylen-, Oxy-1,2 butylen-, Oxy-1,4 butylen-Gruppe sein kann, oder ein Copolymer davon, wie 4,7-Dioxa-1,10-decandiamin (Jeffamin EDR 176) oder 4,7,10-Trioxan-1,13-tridecandiamin, 4,7,10-Trioxa-1,13-tridecandiamin (ANCAMINE 1922A), alpha-(2-aminomethylethyl)-omega-(2-aminomethylethoxy)-poly(oxypropylen) (JEFFAMINE D 230, D-400), Triethylenglycoldiamin und Oligomere davon (JEFFAMINE XTJ-504, JEFFAMINE XTJ-512), bis(alpha,omega-(Aminomethylethoxy)-polyoxypropylen/co-polyoxyethylen (JEFFAMINE XTJ-511), bis-(3-Aminopropyl)polytetrahydrofuran 350, bis-(3-Aminopropyl)polytetrahydrofuran 750, Poly(oxy(methyl-1,2-ethanediyl)), 2-Aminopropan terminierter Polyether auf Basis von Propylenoxid und 1,1,1-Trimethylolpropan (3: 1) (JEFFAMINE T-403), und Diaminopropyldipropylenglycol.

Bevorzugte Polyamine sind Polyamine wie Diethylentriamin (DETA), Triethylentetramin (TETA), 1,3-Bisaminocyclohexylamin (1,3-BAC), Isophorondiamin (IPDA), N-Aminoethylpiperazin (NAEP), 4,7-Dioxadecan-1,10-diamine, 4,9-Dioxadodecane-1,12-diamine, 4,7,10-Trioxa-1,13-tridecandiamin (ANCAMINE 1922A), JEFFAMINE D 230, JEFFAMINE D-400, JEFFAMINE XTJ-504, und JEFFAMINE XTJ-511.

In einer bevorzugten Ausführungsform handelt es sich bei dem Diamin um ein Polyoxyalkylendiamin, das besonders bevorzugt Einheiten auf Basis von Ethylenoxid, Oxetan, Tetrahydrofuran oder ein Gemisch von zwei oder mehreren dieser Komponenten aufweist. Insbesondere ist es bevorzugt, wenn das Polyoxyalkylendiamin ein Polyoxyalkylendiamin der allgemeinen Formel II ist, in der x1 und x2 unabhängig voneinander für einen Wert von 0 bis 70, insbesondere einen Wert von 1 bis 10 stehen. Solche Polyamine haben den Vorteil, dass sie hochmolekular und niedrigviskos sind.

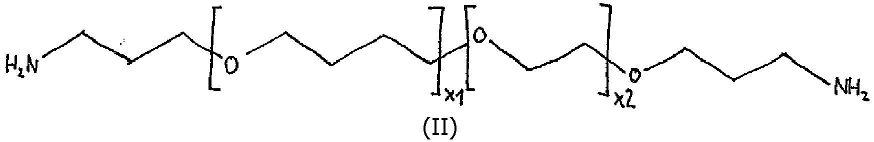

Des Weiteren ist es bevorzugt, wenn das Diamin ein Molekulargewicht im Bereich von 130 bis 500 g/Mol aufweist. Dies hat den Vorteil, dass das Endprodukt nicht zu viskos ist.

Bei dem optionalen Bestandteil handelt es sich um eine phenolische Verbindung mit zwei gegenüber einer Reaktion mit den Methylol-Gruppen des (Hydroxymethyl)phenols reaktiven Zentren. Unter diesen reaktiven Zentren sollen im Rahmen der vorliegenden Erfindung Teile der phenolischen Verbindung verstanden werden, die unter Abspaltung von Wasserstoff und der Hydroxygruppe des (Hydroxymethyl)phenols (d.h., einer Kondensation als Bruttoreaktion) reagieren können. Es handelt sich demzufolge um substituierte Kohlenstoffatome der phenolischen Verbindung, die in den aromatischen Ring integriert sind. Vorzugsweise handelt es sich bei diesen phenolischen Verbindungen um Resorcin und/oder Resorcinderivate, Bisphenol A oder Derivate davon .

Bei dem im erfindungsgemäßen oligomeren Kondensationsprodukt (I) einzusetzenden Resorcin-Derivat handelt es sich vorzugsweise um ein alkyliertes Resorcin, das ein oder zwei zusätzliche Alkylgruppen enthalten kann. Bevorzugt handelt es sich um ein monoalkyliertes Resorcin. Hinsichtlich der Substituenten am Resorcin unterliegt die vorliegende Erfindung keinen relevanten Beschränkungen, allerdings ist es bevorzugt, wenn es sich bei mindestens einem Substituenten am Resorcin um einen C1-C12', insbesondere einen C1-C8-Alkylrest handelt. Besonders bevorzugt im oligomeren Kondensationsprodukt zu verwendende Resorcin-Derivate sind das 2-Methylresorcinol, das 4-Butylresorcinol und das 4-Hexylresorcinol. Diese Resorcin-Derivate haben den Vorteil, dass sie zusätzlich die Konzentration an phenolischem, katalytisch aktivem Hydroxyl erhöhen.

Bei den im erfindungsgemäßen oligomeren Kondensationsprodukt (I) einzusetzenden Bisphenolderivaten handelt es sich insbesonders um 3,3'-Diallyl-4,4'-bisphenol A, 3,3'-Dimethyl-4,4'-bisphenol A, Dimethylbisphenol P oder Gemische davon. Besonders bevorzugt ist die Verwendung von 3,3'-Diallyl-4,4'-bisphenol A.

Oligomere Kondensationsprodukte, die einen Anteil an zusätzlicher phenolischer Verbindung enthalten, haben wegen der hohen Konzentration an phenolischen Gruppen eine besonders starke katalytische Wirkung und sind daher gegenüber oligomeren Kondensationsprodukten, die kein Resorcin enthalten im Rahmen dieser Erfindung bevorzugt.

Bei dem erfindungsgemäßen Kondensationsprodukt handelt es sich um ein oligomeres Kondensationsprodukt.

Unter einem monomeren Kondensationsprodukt ist im Vergleich zu einem oligomeren Kondensationsprodukt ein Produkt zu verstehen, das nur Verbindungen mit einer einzigen Polyamin- und/oder einer einzigen Hydroxymethylphenol-Einheit enthält. In oligomeren Kondensationsprodukten finden sich demzufolge auch Verbindungen mit mindestens zwei Hydroxymethylphenol-Einheiten sowie mindestens zwei Polyamin-Einheiten. Bevorzugte oligomere Kondensationsprodukten weisen eine mittlere Anzahl von mindestens 1,5 Hydroxymethylphenol-Einheiten und mindestens 1,5 Polyamin-Einheiten, insbesondere mindestens zwei Hydroxymethylphenol-Einheiten und mindestens zwei Polyamin-Einheiten und besonders bevorzugt mindestens 2,5 Hydroxymethylphenol-Einheiten und mindestens 2,5 Polyamin-Einheiten auf.

Die erfindungsgemäßen oligomeren Kondensationsprodukte enthalten oligomere Verbindungen mit einer Anzahl von Hydroxymethylphenol-Einheiten im Bereich von 1 bis 5, vorzugsweise 1 bis 3, und einer Anzahl an Diaminen im Bereich von 2 bis 6, und insbesondere 2 bis 4. Umfasst das oligomere Kondensationsprodukt zusätzlich Einheiten der phenolischen Verbindung, enthält das oligomere Kondensationsprodukt Verbindungen mit einer Anzahl an Einheiten der optionalen phenolischen Verbindung im Bereich von 1 bis 5, vorzugsweise 1 bis 3 und einer Anzahl an Diaminen im Bereich von 2 bis 6 und insbesondere 2 bis 4. Für jede Einheit der phenolischen Verbindung enthalten die Verbindungen in einem solchen Kondensationsprodukt zwei (Hydroxymethyl)phenol-Einheiten, so dass deren Anzahl in den Verbindungen doppelt so hoch ist wie die der Einheiten der phenolischen Verbindung.

Die erfindungsgemäßen oligomeren Kondensationsprodukte aus (Hydroxymethyl)phenolen und Polyaminen lassen sich aus den zuvor beschriebenen phenolischen Verbindungen und Polyaminen durch Kondensationsreaktion herstellen. Die Herstellung dieser Kondensationsprodukte ist nach üblichen Kondensationsverfahren möglich, bevorzugt werden jedoch die Kondensationsprodukte nach dem im Folgenden beschriebenen Verfahren hergestellt.

So stellt ein weiterer Aspekt der vorliegenden Erfindung ein neues Verfahren für die Herstellung von erfindungsgemäßen Kondensationsprodukten dar. Dieses Verfahren zeichnet sich dadurch aus, dass mindestens ein wie vorstehend beschriebenes (Hydroxymethyl)phenol mit mindestens einem Polyamin und wahlweise mindestens einer phenolischen Verbindung mit zwei gegenüber einer Reaktion mit den Methylol-Gruppen des (Hydroxymethyl)phenols reaktiven Zentren zu einem oligomeren Kondensationsprodukt umgesetzt wird.

Als (Hydroxymethyl)phenol kann eine wie oben beschriebene (Hydroxymethyl)phenolverbindung verwendet werden. Als Polyamin kann eine wie oben beschriebene Polyamin-Verbindung verwendet werden. Schließlich kann als optionale phenolische Verbindung eine wie oben beschriebene phenolische Verbindung verwendet werden. Insoweit wird auf die obigen Ausführungen verwiesen.

In einer bevorzugten Ausführungsform umfasst das erfindungsgemäße Verfahren die folgenden Verfahrensschritte:
(i) gegebenenfalls Vorlegen von mindestens einem (Hydroxymethyl)phenol gemäß der vorstehenden Definition und mindestens einer phenolischen Verbindung mit zwei gegenüber einer Reaktion mit den Methylol-Gruppen des (Hydroxymethyl)phenols reaktiven Zentren bei einer Temperatur von 15 bis 100 °C, bevorzugt 20 bis 90 °C, besonders bevorzugt 20 bis 70°C in einem Reaktionsgefäß, und anschließendes Erhöhen der Temperatur auf 120 bis 190 °C, bevorzugt auf 120 bis 180 °C, besonders bevorzugt auf 120 bis 170 °C,
(ii) Vorlegen von mindestens einem (Hydroxymethyl)phenol oder dem Reaktionsprodukt aus (i) und von mindestens einem Polyamin bei einer Temperatur von 15 bis 100 °C, bevorzugt von 20 bis 90 °C, besonders bevorzugt von 20 bis 70°C in einem Reaktionsgefäß;
(iii) Erhöhen der Temperatur auf 130 bis 210 °C, bevorzugt auf 140 bis 200 °C, besonders bevorzugt auf 150 bis 195 °C.

Die Umsetzung in dem erfindungsgemäßen Verfahren, insbesondere der zuvor beschriebene Verfahrensschritt (i) betreffend das anschließende Erhöhen der Temperatur, wird vorzugsweise für einen Zeitraum von 0,5 bis 10, bevorzugt von 1 bis 8 Stunden, und besonders bevorzugt von 1 bis 5 Stunden, durchgeführt.

Des Weiteren ist es bevorzugt, wenn das erfindungsgemäße Verfahren unter inerten Bedingungen, insbesondere in Gegenwart eines Inertgases und unter Ausschluss von Sauerstoff, durchgeführt wird. Dies hat den Vorteil, dass die empfindlichen Amine gegen Nebenreaktionen geschützt sind.

Es hat sich als zweckmäßig erwiesen, wenn das mindestens eine (Hydroxymethyl)phenol oder das Reaktionsprodukt des (Hydroxymethyl)phenols mit der phenolischen Verbindung mit dem mindestens einen Polyamin in einem molaren Verhältnis von 3 : 1 bis 1 : 5, bevorzugt 1 : 2 bis 1 : 4, und besonders bevorzugt 1 : 2 bis 1 : 3, umgesetzt wird.

Die vorliegende Erfindung betrifft ferner ein oligomeres Kondensationsprodukt, welches durch das zuvor beschriebene Verfahren erhältlich ist.

Das erfindungsgemäße oligomere Kondensationsprodukt eignet sich insbesondere als Härter für Amin-reaktive Substanzen, welche mindestens zwei Amin-reaktive funktionelle Gruppen aufweisen. Als derartige Amin-reaktive funktionelle Gruppen kommen insbesondere Glycidylether- und/oder IsocyanatGruppen in Betracht.

In einer Ausführungsform der vorliegenden Erfindung ist die Amin-reaktive Substanz, welche mindestens zwei Amin-reaktive funktionelle Gruppen aufweist, ein Diglycidylether. Insbesondere ist die Substanz ein Diglycidylether von Bisphenol-A, Bisphenol-F oder Bisphenol-A/F. Solche Diglycidylether sind beispielsweise als Araldite^{®} GY 250, GY 282 (Huntsman) oder D.E.R.™ 331 oder D.E.R.™ 330 (Dow) oder Epikote 828 (Hexion) erhältlich.

Durch Mischen der Amin-reaktiven Substanz, welche mindestens zwei Amin-reaktive funktionelle Gruppen aufweist, mit dem erfindungsgemäßen oligomeren Kondensationsprodukt tritt eine Reaktion der Amingruppen des oligomeren Kondensationsprodukts mit den Amin-reaktiven funktionellen Gruppen der Amin-reaktiven Substanz auf und es erfolgt eine Aushärtung.

Daher betrifft die vorliegende Erfindung insbesondere die Verwendung von mindestens einem erfindungsgemäßen oligomere Kondensationsprodukt oder mindestens einem gemäß dem oben beschriebenen Verfahren erhältlichen oligomeren Kondensationsprodukt in Epoxidharzsystemen, beispielsweise im Rahmen von Epoxidharzklebstoffen und Beschichtungen auf Basis von Epoxidharzen.

Insbesondere werden die erfindungsgemäßen oligomeren Kondensationsprodukte zur Beschleunigung der Aushärtung von Epoxidharzklebstoffen, zur Verbesserung der Haftung von Epoxidharzklebstoffen und/oder Schälfestigkeit von Epoxidharzklebstoffen verwendet.

Das erfindungsgemäße oligomere Kondensationsprodukt kann als solches oder in einer Zusammensetzung eingesetzt werden.

Die erfindungsgemäßen oligomeren Kondensationsprodukte sowie die aus dem erfindungsgemäßen Verfahren resultierenden erfindungsgemäßen oligomeren Kondensationsprodukte finden insbesonders Einsatz in Härterkomponenten von zweikomponentigen Epoxidsystemen. Die bezeichneten oligomeren Kondensationsprodukte können hier direkt oder als Bestandteile der Härterkomponente eingesetzt werden.

Besonders bevorzugt werden die erfindungsgemäßen oligomeren Kondensationsprodukte als Härter in zweikomponentigen Epoxidharz-Klebstoffen eingesetzt. Die damit gehärteten zweikomponentigen Epoxidsysteme und die daraus erhaltenen Produkte weisen sehr vorteilhafte Eigenschaften, insbesondere für schnelle, beschleunigte Härtungen und Kalthärtungen auf.

Wenn das erfindungsgemäße Kondensationsprodukt zur Aushärtung von Amin-reaktiven Systemen eingesetzt wird, betrifft die vorliegende Erfindung auch eine zweikomponentige Zusammensetzung, welche eine erste Komponente K1 und eine zweiten Komponente K2 enthält. Die erste Komponente K1 umfasst mindestens eine Amin-reaktive Verbindung mit mindestens zwei funktionellen Gruppen, welche mit Aminen reagieren können. Die zweite Komponente K2 umfasst mindestens ein erfindungsgemäßes oligomeren Kondensationsprodukt. Amin-reaktive Verbindungen, welche mindestens zwei funktionelle Gruppen aufweisen, die mit Aminen reagieren können, sind bereits im vorstehenden beschrieben worden und umfassen insbesondere Diepoxide.

Beide Komponenten K1 und K2 können bei Bedarf weitere dem Fachmann bekannte Inhaltsstoffe umfassen. Derartige weitere Inhaltsstoffe sind insbesondere Füllstoffe, Weichmacher, Lösungsmittel, Katalysatoren und/oder Additive.

Als Füllstoffe sind insbesondere Ruße, Kreiden, insbesondere beschichtete Kreiden, Sande, Silikate, Leichtfüllstoffe, wie Keramik- oder Glaskugeln, insbesondere Keramik- oder Glashohlkugeln, pyrogene Kieselsäuren, und Flugasche sowie Gemische davon bevorzugt.

Als Lösungsmittel sind Lösungsmittel bevorzugt, welche nicht als VOC ("*volatile organic compounds'*') eingestuft werden. Besonders bevorzugt sind höher siedende Kohlenwasserstoffe wie Polyethylbenzole (Solvesso 200; CAS 64742-94-5) oder alkylierte Naphthaline.

Als Weichmacher sind Phthalate und Adipate bevorzugt, insbesondere Diisodecylphthalat (DIDP) und Dioctyladipat (DOA).

Die beschriebenen zweikomponentigen Zusammensetzungen lassen sich in verschiedenen Anwendungsfeldern einsetzen. Bevorzugt ist deren Verwendung als Klebstoff oder Dichtstoff, insbesondere als struktureller Klebstoff. Es hat sich gezeigt, dass die mittels der erfindungsgemäßen Kondensationsprodukte erzielbaren Eigenschaften im Klebstoffbereich besonders vorteilhaft sind.

Nach dem Mischen der Komponenten K1 und K2 der beschriebenen zweikomponentigen Zusammensetzung wird der Klebstoff auf eine Substratoberfläche aufgebracht und mit einer weiteren Substratoberfläche in innigen Kontakt gebracht. Die ausgehärtete Zusammensetzung wirkt als Klebschicht, welche befähigt ist, Kräfte zwischen den zwei Substratoberflächen des gebildeten Verbundkörpers zu übertragen.

Die zweikomponentige Zusammensetzung eignet sich aufgrund ihrer Eigenschaften zweckmäßig als struktureller Klebstoff im Hoch- und Tiefbau, sowie in der Industrie. Beispielsweise kann eine derartige zweikomponentige Zusammensetzung, insbesondere eine zweikomponentige Epoxidharz-Zusammensetzung, d.h. in welcher die Komponente K1 einen Diglycidylether umfasst, als Klebstoff für das Verkleben von faserverstärkten Kompositen eingesetzt werden. Ein illustrierendes Beispiel hierfür ist das Verkleben von Kohlenfaser-Lamellen beim Verstärken von Bauwerken, wie Brücken.

Weiterhin können erfindungsgemäße zweikomponentige Zusammensetzungen, insbesondere eine zweikomponentige Epoxidharz-Zusammensetzung, als Kunststoffmatrix für die Herstellung von faserverstärkten Kompositen eingesetzt werden. So lassen sich beispielsweise Kohlen- oder Glasfasern in eine zweikomponentige Zusammensetzung einbetten und können im ausgehärteten Zustand als Faser-Komposit, beispielsweise in Form einer Lamelle, zum Einsatz kommen.

Ebenso können beispielsweise Fasergewebe oder -gelege mittels einer zweikomponentigen Zusammensetzung, insbesondere mittels einer zweikomponentigen Epoxidharz-Zusammensetzung, auf ein Bauwerk appliziert werden, und dort mit dem Bauwerk zusammen ein faserverstärktes Komposit bilden.

Die Viskosität der erfindungsgemäßen oligomeren Kondensationsprodukte hängt dabei jeweils stark von der eingesetzten phenolischen Verbindung sowie vom eingesetzten Polyamin ab. Besonders geeignete erfindungsgemäße oligomere Kondensationsprodukte weisen eine Viskosität bei 25°C von kleiner als 10000 mPas auf, um eine hinlängliche Verarbeitbarkeit zu gewährleisten. Bevorzugte erfindungsgemäße oligomere Kondensationsprodukte weisen Viskositäten im Bereich zwischen 200 und 7000 mPas auf.

Dem Fachmann ist ersichtlich, dass bei dieser Art von Umsetzung in geringem Maße auch noch nicht reagierte Bestandteile im Endprodukt vorhanden sein können.

Die folgende Erfindung wird anhand der nachfolgenden Beispiele näher erläutert.

### Beispiele

### Beispiel 1

Ein Gefäß wird mit 180 g (0,88 Mol) Jeffamin EDR 176 und 99 g (0,58 Mol) 2,6-Bis(hydroxymethyl)-p-kresol befüllt und unter Stickstoffatmosphäre erwärmt. Nachdem eine homogene Mischung erhalten wurde (bei etwa 50°C), wird die Temperatur sukzessive auf 180°C erhöht, wobei ab einer Temperatur von 160°C ein stetiges Sieden feststellbar war. Im Bereich von 180 bis 178°C wurden insgesamt 66 ml eines Destillats erhalten. Das Produkt wurden in Form eines viskosen, gelblich klaren Polymers als Rückstand erhalten.

### Beispiel 2

In einem Gefäß wurden 90 g 4,7-Dioxa-1,10-dekandiamin und 60 g 2,6-Bis(hydroxymethyl)-p-kresol vorgelegt und sukzessive auf eine Temperatur von 178°C erhitzt. Im Bereich von 165°C bis 170°C wurden insgesamt 16 ml eines Destillats aufgefangen. Das Produkt wurde in Form eines viskosen gelblich klaren Polymers als Rückstand erhalten.

### Beispiel 3

In einem Gefäß wurden 120 g Jeffamin D 230 und 60 g 2,6-Bis(hydroxymethyl)-p-kresol vorgelegt und sukzessive auf eine Temperatur von 184°C erhitzt. Bei einer Temperatur von 184°C wurden insgesamt 12 ml eines Destillats aufgefangen. Das Produkt wurde in Form eines viskosen gelblich klaren Polymers als Rückstand erhalten.

### Beispiel 4

In einem Gefäß wurden 120 g (1,18 Mol) 4,9-Dioxa-1,12-Dodekandiamin, 20 g (0,36 Mol) Resorcinol und 60 g (0,71 Mol) 2,6-Bis(hydroxymethyl)-p-kresol vorgelegt und sukzessive auf eine Temperatur von 175°C erhitzt. Bei dieser Temperatur wurden insgesamt 8 ml eines Destillats aufgefangen. Danach war ein starker Viskositätsanstieg und Gelierung zu beobachten. Das Produkt war nicht verwendbar.

### Beispiel 5

In einem Gefäß wurden 120 g (1,18 Mol) 4,9-Dioxa-1,12-Dodekandiamin, 10 g (0,18 Mol) Resorcinol und 70 g (0,83 Mol) 2,6-Bis(hydroxymethyl)-p-kresol vorgelegt und sukzessive auf eine Temperatur von 173°C erhitzt. Bei dieser Temperatur wurden insgesamt 10 ml eines Destillats aufgefangen. Danach war ein starker Viskositätsanstieg beobachten. Nach Abkühlen der Reaktionsmischung konnte kein Resorcinrestmonomer detektiert werden.

### Beispiel 6

In einem Gefäß wurden 120 g (1,18 Mol) 4,9-Dioxa-1,12-Dodekandiamin, 20 g (0,35 Mol) Methyl - Resorcinol und 60 g (0,71 Mol) 2,6-Bis(hydroxymethyl)-p-kresol vorgelegt und sukzessive auf eine Temperatur von 173°C erhitzt. Bei dieser Temperatur wurden insgesamt 12 ml eines Destillats aufgefangen. Danach war ein starker Viskositätsanstieg beobachten. Nach Abkühlen der Reaktionsmischung konnte ein Restgehalt von nur noch 0,04% Methylresorcinmonomer bestimmt werden.

### Beispiel 7

In einem Gefäß wurden 70 g (0,45 Mol) Diallylbisphenol A und 80 g (0,95 Mol) 2,6-Bis(hydroxymethyl)-p-kresol vorgelegt und auf eine Temperatur von 150°C erhitzt. Bei dieser Temperatur wurden insgesamt 16 ml eines Destillats aufgefangen. Nach Abkühlen der Reaktionsmischung ergab die Analyse einen Restgehalt an Diallylbisphenol A von 7,0% ±0,2 und einen Restgehalt an 2,6-Bis(hydroxymethyl)-p-kresol von 0,6% ±0,02.

Zu dieser Mischung wurden 150 g (1,47 Mol) 4,9-Dioxa-1,12-dodekandiamin gegeben und die Reaktionsmischung auf 173°C erhitzt. Bei einer Temperatur von 158°C war ein erneutes Schäumen zu beobachten und bei einer Temperatur von 173°C wurden insgesamt 10 ml eines Destillats erhalten. Nach Abkühlen zeigte das erhaltene Produkt einen Restgehalt an Diallyl Bisphenol A von nur noch 1,5% ± 0,1.

### Beispiel 8

Ein Gefäß wird mit 10 g (0,18 Mol) Resorcinol, 4,7,10-Trioxa-1,13-tredekandiamin und 120 g (1,09 Mol) und 70 g (0,83 Mol) 2,6-Bishydroxymethyl-p-kresol gefüllt und unter Stickstoffatmosphäre erwärmt. Nachdem eine homogene Mischung erhalten wurde (bei etwa 120°C), wird die Temperatur sukzessive auf 178°C erhöht, wobei ab einer Temperatur von 125°C ein stetiges Sieden feststellbar war. Im Bereich von 165 bis 178°C wurden insgesamt 12 ml eines Destillats erhalten. Das Produkt wurde in Form eines viskosen klaren Polymers als Rückstand erhalten.

### Beispiel 9

Ein Gefäß wurde mit 25 g (0,44 Mol) 2-Methylresorcinol, 115 g (1,05 Mol) 4,7-10-Trioxa-1,13-tridekandiamin und 60 g (0,71 Mol) 2,6-Bishydroxymethyl-p-kresol befüllt und unter Stickstoffatmosphäre erwärmt. Nachdem eine homogene Mischung erhalten wurde (bei etwa 110°C), wird die Temperatur sukzessive auf 176°C erhöht, wobei ab einer Temperatur von 155°C ein stetiges Sieden feststellbar war. Im Bereich von 155 bis 176°C wurden insgesamt 11 ml eines Destillats erhalten. Das Produkt wurde in Form eines viskosen Polymers als Rückstand erhalten, und wieß eine rötlich/hellbraune Farbe auf.

### Beispiel 10

In einem Gefäß wurden 50 g (0,88 Mol) 2-Methylresorcinol, 50 g Pseudocumol als Hilfslösungsmittel und 120 g (1,43 Mol) 2,6-Bis(hydroxymethyl)-p-kresol vorgelegt und unter Stickstockstoffatmosphäre erwärmt. Bei einer Temperatur von 80°C bildete sich ein fließfähiges Material, während bei einer Temperatur von 120°C alle Feststoffe gelöst waren. Bei einer Temperatur von 145°C begann die Zusammensetzung zu sieden und kräftig zu schäumen, wobei im Bereich von 140 bis 145°C insgesamt 22 ml eines Destillats erhalten wurden. Gemäß GPC-Analytik wies der Rückstand ein Mw von 4850 ± 250 g/Mol und ein Mn von 1420 ± 100 g/Mol auf.

In einer zweiten Stufe wurden zum erhaltenen Rückstand 230 g (2.09 Mol) 4,7,10-Trioxa-1,13-tridekandiamin zugesetzt und die Reaktionsmischung wurde auf 150°C erhitzt. Bei einer Temperatur von 165 bis 185°C und anschließendem Anlegen eines Vakuums wurden insgesamt 138 ml eines Destillats erhalten. Das (als Rückstand erhaltene) Produkt hatte eine rötlich/hellbraune Farbe und Restgehalte an 1-Methylresorcinol von < 0,05%, an 2,6-Dimethylol-p-Kresol von 0,03% ± 0,01% und Pseudocumol von 1,21% ± 0,03%.

### Beispiel 11

In einem Gefäß wurden unter Stickstoffatomsphäre 50 g (0,876 Mol) 2-Methylresorcinol, 60 g Ethylenglycol als Hilfslösungsmittel und 100 g (1,19 Mol) 2,6-Bis(hydroxymethyl)-p-kresol unter Rühren erhitzt, bis bei einer Temperatur von 105°C eine vollständige Lösung entstand. Im Temperaturbereich von 140°C bis 156 °C wurden insgesamt 20 ml eines Destillats erhalten, wobei am Ende der Destillation ein starker Viskositätsanstieg feststellbar war. Die Analyse des im Gefäß verbleibenden Materials wies einen Gehalt an 2-Methylresorcinol von 0,06% ± 0,01 und einen Gehalt von 2,6-Dimethylol-p-kresol von 2,1% ± 0,1 sowie eine Molekulargewichtsverteilung nach GPC von Mw = 9590 ± 500 g/Mol und ein Mn von 1860 ± 100 g/Mol auf.

In einer zweiten Stufe wurde zum erhaltenen Rückstand 180 g (1,64 Mol) 4,7,10-Trioxa-1,13-tridekandiamin zugesetzt und die Reaktionsmischung wurde erneut erhitzt. Ab einer Temperatur von 147°C war ein erneutes Sieden feststellbar und bis zu einer Temperatur von 180°C wurden 120 ml eines Destillats erhalten. Nach Anlegen eines Vakuums wurden noch einmal 62 ml eines Destillats erhalten. Das erhaltene Produkt wies einen Restgehalt an Ethylenglykol von 1,59% ± 0,08 auf.

### Beispiel 12

In einem Gefäß wurden unter Stickstoffatomsphäre 60 g (0,617 Mol) 4-Hexylresorcinol, 40 g Pseudocumol als Hilfrslösungsmittel und 90 g (1,07 Mol) 2,6-Bis(hydroxymethyl)-p-kresol unter Rühren erhitzt, bis bei einer Temperatur von 80°C eine vollständige Lösung entstand. Im Temperaturbereich von 130°C bis 140°C wurden insgesamt 22 ml eines Destillats erhalten, wobei am Ende der Destillation ein starker Viskositätsanstieg feststellbar war. Die Analyse des im Gefäß verbleibenden Materials wies einen Gehalt an 4-Hexylresorcinol von 2,9%, einen Gehalt von 2,6-Dimethylol-p-kresol von 10,5% sowie eine Molekulargewichtsverteilung nach GPC von Mw = 2370 g/Mol ± 100 und Mn 1130 ± 100 auf.

Zu dieser Mischung wurden 180 g (1,64 Mol) von 4,7,10-Trioxa-1,13-tridekandiamin gegeben und die Mischung wurde weiter auf 160°C erhitzt. Insgesamt wurden 202 ml eines Destillats erhalten. Das als Rückstand erhaltene Produkt hatte eine rötlich/hellbraune Farbe und einen Restgehalt an Pseudocumol von 0,26% ± 0,1%.

## Patentansprüche

1. Oligomeres Kondensationsprodukt aus mindestens einem (Hydroxymethyl)phenol der allgemeinen Formel (I) 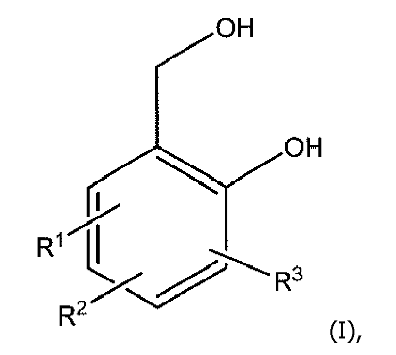 in welcher
R¹ gleich Wasserstoff oder -CH₃ ist,
R² gleich -CH₂OH ist und
R³ gleich Wasserstoff oder -CH₃ ist,
mindestens einem Polyamin und
wahlweise mindestens eine phenolische Verbindung mit zwei gegenüber einer Reaktion mit den Methylol-Gruppen des (Hydroxymethyl)phenols reaktiven Zentren.

2. Oligomeres Kondensationsprodukt nach Anspruch 1, **dadurch gekennzeichnet, dass** R² in ortho-Position zur phenolischen OH-Gruppe in Formel (I) angeordnet ist.

3. Oligomeres Kondensationsprodukt nach Anspruch 1, **dadurch gekennzeichnet, dass** mindestens einer von R¹ und R³ gleich -CH₃ ist.

4. Oligomeres Kondensationsprodukt nach einem der Ansprüche 1 bis 3, **dadurch gekennzeichnet, dass** das Polyamin ein Polyoxyalkylendiamin, insbesondere mit Einheiten auf Basis von Ethylenoxid, Oxetan, Tetrahydrofuran oder einem Gemisch von zwei oder mehreren dieser Komponenten, umfasst.

5. Oligomeres Kondensationsprodukt nach einem der Ansprüche 1 bis 4, **dadurch gekennzeichnet, dass** das Polyamin der allgemeinen Struktur (II) entspricht 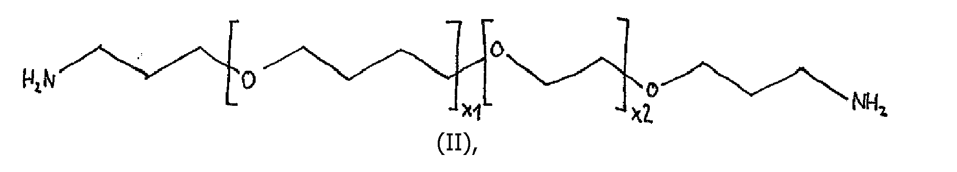 in der x1 und x2 unabhängig voneinander für einen Wert von 0 bis 70, insbesondere für einen Wert von 1 bis 10, stehen.

6. Oligomeres Kondensationsprodukt nach einem der Ansprüche 1 bis 5, **dadurch gekennzeichnet, dass** das Polyamin ein Molekulargewicht 130 bis 500 g/mol aufweist.

7. Oligomeres Kondensationsprodukt nach einem der vorstehenden Ansprüche, **dadurch gekennzeichnet, dass** die phenolische Verbindung Diallylbisphenol A oder ein Resorcinderivat, insbesondere ein alkyliertes Resorcin, vorzugsweise ein monoalkyliertes Resorcin, und besonders bevorzugt ein mit einem Cl-C8-Alkylrest substituiertes Resorcin ist.

8. Verfahren zur Herstellung eines oligomeren Kondensationsprodukts, **dadurch gekennzeichnet, dass** mindestens ein (Hydroxymethyl)phenol gemäß der Definition in einem der Ansprüche 1 bis 3 mit mindestens einem Polyamin und wahlweise Resorcin oder mindestens einem Resorcinderivat oder Diallylbisphenol A umgesetzt wird.

9. Verfahren nach Anspruch 8, **dadurch gekennzeichnet, dass** ein Polyamin gemäß der Definition in einem der Ansprüche 4 bis 6 eingesetzt wird.

10. Verfahren nach Anspruch 8 oder 9, **dadurch gekennzeichnet, dass** eine phenolische Verbindung gemäß Anspruch 7 eingesetzt wird.

11. Verfahren nach einem der Ansprüche 8 bis 10, umfassend die folgenden Verfahrensschritte:
(i) gegebenenfalls Vorlegen von mindestens einem (Hydroxymethyl)phenol gemäß der Definition in einem der Ansprüche 1 bis 3 und mindestens einer phenolischen Verbindung mit zwei gegenüber einer Reaktion mit den Methylol-Gruppen des (Hydroxymethyl)phenols reaktiven Zentren bei einer Temperatur von 15 bis 100 °C, bevorzugt 20 bis 90 °C, besonders bevorzugt 20 bis 70 °C in einem Reaktionsgefäß, und anschließendes Erhöhen der Temperatur auf 120 bis 190 °C, bevorzugt auf 120 bis 180 °C, besonders bevorzugt auf 120 bis 170 °C.
(ii) Vorlegen von mindestens einem (Hydroxymethyl)phenol gemäß der Definition in einem der Ansprüche 1 bis 3 oder dem Reaktionsprodukt aus (i) und von mindestens einem Polyamin bei einer Temperatur von 15 bis 100 °C, bevorzugt von 20 bis 90 °C, besonders bevorzugt von 20 bis 70 °C in einem Reaktionsgefäß,
(iii) Erhöhen der Temperatur auf 130 bis 210 °C, bevorzugt auf 140 bis 200 °C, besonders bevorzugt auf 150 bis 195 °C.

12. Verfahren nach Anspruch 11, **dadurch gekennzeichnet, dass** das Erhöhen der Temperatur im optionalen Schritt (i) des Verfahrens für einen Zeitraum von 0,5 bis 10 Stunden, bevorzugt von 1 bis 8 Stunden, besonders bevorzugt von 1 bis 5 Stunden durchgeführt wird.

13. Verfahren nach einem der Ansprüche 8 bis 12, **dadurch gekennzeichnet, dass** das mindestens eine (Hydroxymethyl)phenol oder das Reaktionsprodukt von (Hydroxymethyl)-phenol und der phenolischen Verbindung mit dem mindestens einen Polyamin in einem molares Verhältnis von 3 : 1 bis 1 : 5, bevorzugt von 1 : 2 bis 1 : 4, besonders bevorzugt von 1 : 2 bis 1 : 3 umgesetzt wird.

14. Kondensationsprodukt erhältlich nach einem Verfahren gemäß einem der Ansprüche 8 bis 13.

15. Verwendung von mindestens einem Kondensationsprodukt gemäß einem der Ansprüche 1 bis 7 oder gemäß Anspruch 14 in Epoxidharzsystemen, insbesondere in Epoxidharzklebstoffen und Epoxidharzbeschichtungen.

16. Zweikomponentige Zusammensetzung, umfassend eine erste Komponente K1, welche mindestens zwei funktionellen Gruppen, welche mit Aminen reagieren können, umfasst und eine zweite Komponente K2, welche mindestens ein Kondensationsprodukt gemäß einem der Ansprüche 1 bis 7 oder gemäß Anspruch 14 umfasst.
